# EUROPEAN PATENT SPECIFICATION

(11) **EP 0 470 457 B1**
(45) Date of publication and mention of the grant of the patent: **24.05.1995**
(21) Application number: 91112585.4
(22) Date of filing: 26.07.1991
(51) Int. Cl.: F16C 13/00

(54) **Roll member having glass surface and method for manufacturing same**
Walze mit einer Glasoberfläche und deren Herstellungsverfahren
Rouleau ayant une surface de verre et procédé pour sa fabrication

(30) Priority: 10.08.1990 JP 213082/90
(43) Date of publication of application: 12.02.1992
(73) Proprietor: KABUSHIKI KAISHA NAKASHIMA, Yokohama-shi, Kanagawa-ken (JP)
(72) Inventor: Nakashima, Mikio, Owariasahi-shi, Aichi-ken (JP)
(74) Representative: Liedl, Christine, Dipl.-Chem.

(56) References cited:
- EP-A- 0 207 921
- DE-A- 2 431 923
- DE-A- 4 038 254
- DE-C- 357 400
- FR-A- 2 592 824
- GB-A- 1 042 987
- US-A- 3 892 883
- PATENT ABSTRACTS OF JAPAN, vol. 13, no. 183 (M-820)[3531], 28th April 1989;& JP-A-01 013 324 (SHINAGAWA REFRACT. CO., LTD) 18-01-1989
- IDEM
- PATENT ABSTRACTS OF JAPAN, vol. 14, no. 57 (C-684)[4000], 2nd February 1990;& JP-A-01 283 389 (KAWASAKI STEEL CORP.) 14-11-1989
- WORLD PATENT INDEX, accession no. 83-58278K [24], Derwent Publications Ltd,London, GB; & SU-A-947 108 (A S BELO GEN. INORG. C.) 30-07-1982

## Description

The present invention relates to a method for providing a metal roll to be used as a printing or guide roll with a glass surface.

A metal roll has been used for example as a printing roll or a paper manufacturing or iron manufacturing roll for industrial use. However, a known metal roll tends to be deteriorated by corrosion when aging, since the roll comes into contact with a cleaning acid or alkaline liquid, a printing ink, a paper product or a metal product. Furthermore, such a roll is often used in a severe environment, such as high temperature and high humidity, so that the deterioration of the surface of the roll is accelerated by a production of a spot thereon or foreign matter stuck thereto, thus resulting in a decreased durability.

In addition, in case of a guide roll which is commonly used to guide an article or a product, it is preferable to provide an electrical insulation thereto, since such a guide roll is usually used with electronic equipment. It is also desirable that no foreign matter (dust, etc.) tend to stick to the surface of the roll. Even if foreign matter sticks to the surface of the roll, the foreign matter must be easily removed therefrom.

The Patent Abstracts of Japan, Vol. 13, No. 183 (M-820)[3531] of April 28, 1989, page 129 M 820 mention the document JP-A-1-13324 as describing an electrically insulating conveyance roller made by flame spraying the surface of a metallic roller of steel, cast iron or the like with a vitreous material. The metal must be heated to 300 to 800°C before the coating is produced from a vitreous powder material having a softening point of 1000°C or less.

The document EP-A-0 207 921 describes a press roll for paper machines with a metal core, a metal material layer strongly bonded to the outer periphery of the core and having a smaller coefficient of expansion than the surface material of the core, and a ceramics layer having a porosity of 1 to 30 % formed over the ground layer in order to provide a uniform, smooth and hard surface which has a suitable water retentivity to assure smooth release of wet paper and to provide the wet paper with a proper water content on pressing. The metal core, which may have a controllable crown, is preferably made of a corrosion resistant molybdenum or nickel containing metal and may be provided with a rough surface by a blasting treatment. The metal material layer is formed from a powder of such metal by gas spraying or gas plasma spraying. Following this, the ceramics layer is formed by coating the metal core with a finely divided metallic oxide by plasma spraying such as a water-stabilized plasma spraying, gas plasma spraying or the like. Typical metal oxides include gray and white alumina, titania, alumina-titania, mullite, zirconia-mullite and the like. Finally the ceramics layer is subjected to surface grinding.

The document DE-C-357 400 describes a glass-covered roller having a core consisting of a steel cylinder with a coating of an opaque glass containing metallic components, so that the coefficient of expansion of the glass is the same as that of the steel. The surface is smooth, hard and resistant to chemicals. The roll is first smoothed and cleaned and then coated, but no details of the coating method are described. After cooling, the surface of the glass is ground.

The document DE-A-24 31 923 describes a metal roll with a rubber cover for treating paper, plastic or textile webs. The end faces of the roll are closed with end members having shaft portions for rotation. The surface of the roll is provided with openings and one end member is provided with a suction port so that a reduced pressure can be created inside the roll in order to hold the rubber cover in position.

The document DE-A-40 38 254 which issued from a national application of earlier priority, but is not a prior publication, describes a method for forming a glass coating on the surface of an article such as a plate of stainless steel, although-all materials to be coated with glass may be used as a substrate. The article may be pretreated by blasting and spraying with a ground material. To form the glass layer the article is heated to 100°C or more and the glass is applied by plasma spraying or by gas or flame spraying. In order to form an adherent coating which does not crack, the glass material contains at least 30 to 70 % by weight of SiO₂, 5 to 30 % by weight of B₂O₃, 5 to 30 % by weight of Li₂O and 1 to 10 % by weight of Al₂O₃ as main components, and 0 to 20 % by weight of at least one of the compounds CaO, SrO, MgO, Na₂O, K₂O, TiO₂, ZnO, ZrO₂, SnO₂, BaO and F₂ (substitution) as an additive.

The object of the invention is to provide a metal roll to be used as a printing or guide roll with a smooth glass surface from which any foreign matter sticking thereto can be easily removed and which imparts good electrical insulation, chemical durability such as acid-resistance and alkali-resistance and a long service life to the roll.

This object is achieved by the method of claim 1.

According to the present invention a roll having a metal body is provided with a glassy surface by preheating the surface of the metal body which has been subject to a blast treating to 200 ∼ 600 °C with or without a stainless undercoat layer on the blast-treated surface, spraying a glass material onto the surface of the metal body in a plasma spraying method to form a glass coating thereon, and grinding the glass coating to form a smooth glassy surface after cooling the same.

The invention will be described below in detail with reference to the accompanying drawings, in which:
Figure 1 is a partially broken longitudinal sectional view of a roll provided with a glass surface by the method of the present invention; and,
Figure 2 is a partial enlarged view of the roll shown in Fig. 1.

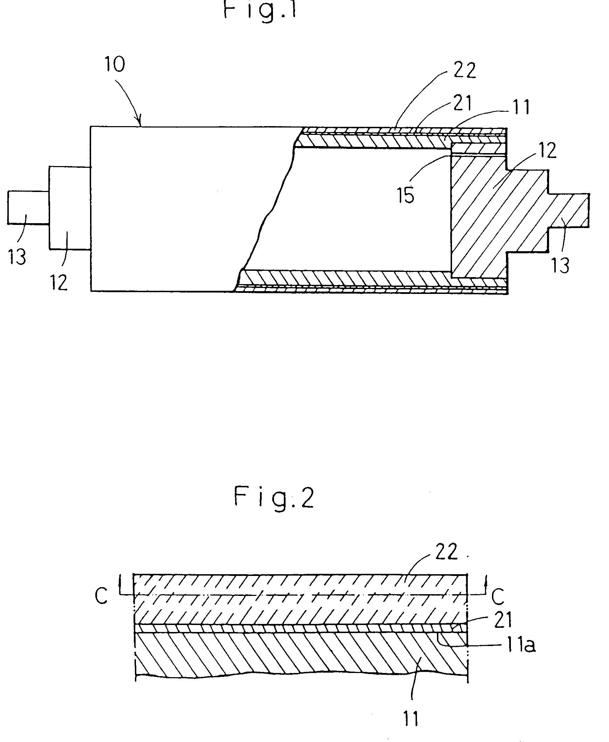

A roll 10 shown in Fig. 1 is used as a printing roll and includes a cylindrical body 11 of a metal such as steel and end members 12, 12 located at opposite ends of the cylindrical body 11 to close the open ends thereof. The end members 12 have shaft portions 13 for rotation and through holes 15 through which a high temperature gas which is produced within the roll 10 in the course of the spraying can be discharged.

As can be seen in Figs. 1 and 2, the roll 10 is coated with a smooth glass layer 22 sprayed on the roll surface of the metal body 11. In Fig. 2, numeral 11a designates a blast treatment surface formed on the roll surface of the cylindrical body 11, and 21 an undercoat layer of a stainless material sprayed on the blast treatment surface 11a.

The following discussion will be directed to a method for manufacturing a roll, as mentioned above.

There are two kinds of rolls, one of which is a "hard type" roll which has a high chemical durability, such as acid-resistance or alkali-resistance, and the other is a "standard type" roll which has a lesser chemical durability than the hard type, depending on the usage thereof. The main difference between the hard type roll and the standard type roll resides in the composition of the spraying glass material, as shown in Table 1 below. There is also a slight difference in the manufacturing process between the hard type roll and the standard type roll.

**(Table 1)**

| | Hard Type | Standard Type |
|---|---|---|
| (A) a primary processing step of the surface of the metal body | 1. steel grid blast | |
| | 2. stainless steel (undercoat) spraying | · · · · · · |
| | | · · · · · · |
| (B) preheating | about 400∼600°C | about 200∼400°C |
| (C) glass spraying | plasma spraying of glass material | |
| (D) cooling (*) | cooling apparatus (about 100∼200°C /h ) | natural cooling |
| (E) grinding | smooth surface (or smooth surface as glass) grinding | |

| | | |
|---|---|---|
| (*) It is preferable to carry this out with a cooling apparatus (about 50 °C /h ) when the roll member has a complex shape and different thickness. | | |

Basically, the manufacturing process of each roll having a glassy surface according to the present invention comprises (A) a primary processing step of the surface of the metal body → (B) a preheating step → (C) a glass spraying step → (D) a cooling step → (E) a grinding step.

Each step will be discussed below.

### (A) primary processing step of the cylindrical body

### (A-1) blast treatment:

The surface of the roll (cylindrical body) on which a sprayed glass layer is to be formed is subject to an undercoat treatment, such as a known steel grid blast, etc. In the illustrated embodiment, 44∼104 »m of steel grid was used.

### (A-2) formation of undercoat layer:

An undercoat layer is formed on the blast treatment surface in accordance with need. Note that it is preferable to provide the undercoat layer especially in case of a hard type roll.

The undercoat layer is usually and advantageously formed by a spraying of stainless steel. The undercoat layer prevents a formation of FeO on the outer surface of the cylindrical body so that a glass layer sprayed thereon later can be firmly bonded to the cylindrical body.

In the Illustrated embodiment, an undercoat layer of "stainless steel 316"_{,} having about 80∼250 »m thickness was formed. It is possible to use an alloy, for example "HASTELOY" (trade name), containing Ni, Cr and Co, etc., in place of the stainless steel 316.

The spraying conditions are as follows.
- Plasma spraying apparatus:: "Plazjet-II 200" produced by Plazjet Inc.
- Spraying circumferential speed:: 30 m/min
- Pitch:: 20 mm/rpm
- Spraying distance:: 200 mm
- Plasma gas:: N₂ (nitrogen) 300 ℓ/min
Ar (argon) 70 ℓ/min
- Plasma current:: 450 A
- Plasma voltage:: 390 V

### (B) Preheating

Thereafter, the surface of the cylindrical body is preheated to about 200 ∼ 600 °C. The preheating temperature depends on the spraying glass material and is usually about 400 ∼ 600 °C for the hard type and about 200°C for the standard type. The preheating is effected as follows by the spraying apparatus. Alternatively, the preheating can be effected also by a furnace.

The following is an example of preheating conditions for the hard type roll member, using a spraying apparatus.
- Plasma spraying apparatus:: Same as above
- Number of preheating steps:: 4 passes (400 ∼ 600 °C)
- Spraying circumferential speed:: 30 m/min
- Number of revolutions:: 91 rpm
- Spraying distance:: 140 m
- Plasma gas:: N₂ (nitrogen) 300 ℓ/min
H₂(hydrogen) 120 ℓ/min
- Plasma current:: 450 A
- Plasma voltage:: 395 V

### (C) Glass spraying

A glass material is sprayed on the surface of the cylindrical body after preheating the latter with the spraying apparatus. The glass material used in the present invention is made of a powdered material which can form a glass coating layer when sprayed and is for example a powdered glass, a raw glass material, frit or raw frit material, or the like. In the present invention, preferably, frit which is partly or entirely molten is used. It is also advantageous to use a powdered mixture in which a water-soluble raw material is mixed with a water-insoluble frit and the remainder is used as it is.

The protection coating layer (glass layer) thus obtained can be easily colored by adding metal oxide or pigment to the spraying glass material.

The composition (%) of the spraying glass material (frit) used in the embodiment of the invention is shown in Table 2 (hard type) and Table 3 (standard type).

In Table 2, the materials represented by No. 1 through No. 13 are those of acid-resistance and alkali-resistance which are not reactive to a solution of PH 1 ∼ 3 or PH 12 ∼ 14. Generally speaking, if more than 65% of SiO₂ is contained in the solution, the solution exhibits acid-resisting and alkali-resisting properties (chemical durability).

The following is an example of spraying conditions.
Spraying glass material used: Hard type No. 1 (Table 2)
Composition (%):

| | |
|---|---|
| SiO₂ | 66 |
| B₂O₃ | 9 |
| Al₂O₃ | 4 |
| Li₂O | 16 |
| CaO | 1 |
| ZnO | 0.5 |
| ZrO₂ | 1.5 |
| SrO | 2 |

Spraying apparatus: Same as above
Spraying circumferential speed: 30 m/min.
Pitch: 5 mm
Spraying distance: 210 mm
Amount of spraying material: 4 kg/h

| Number of passes | N₂(ℓ/min) | H₂(ℓ/min) | Current(A) | Voltage(V) |
|---|---|---|---|---|
| 1 | 300 | 130 | 450 | 398 |
| 2 | 300 | 120 | 450 | 392 |
| 3 | 300 | 100 | 450 | 383 |
| 4 | 300 | 80 | 450 | 375 |
| 5 | 300 | 70 | 450 | 369 |
| 6 | 300 | 70 | 450 | 369 |
| 7 | 300 | 70 | 450 | 369 |
| 8 | 300 | 70 | 450 | 369 |

Under the above conditions, 1.4 mm thickness of the sprayed glass layer was obtained.

### (D) Cooling

The roll is cooled after the glass spraying. The cooling can be a natural cooling but is preferably carried out by a cooling apparatus particularly when the roll has a complex shape and different thicknesses. In particular, the hard type roll should be gradually cooled by a cooling apparatus. As a cooling apparatus a known cooling furnace can be used with which the roll is cooled at a cooling rate of 50 ∼ 200 °C /h .

### (E) Grinding

After cooling, the roll surface is ground to provide a smooth outer surface. The grinding can be effected by a known diamond grinder. In an example, 0.4 ∼ 0.7 mm of the upper surface of the sprayed glass layer of 1.4 mm thickness was removed by the diamond grinder, so that a smooth glass layer of 0.7 ∼ 1.0 mm was obtained. Note C-C in Fig. 2 designates the grinding line up to which the upper surface of the glass layer is to be ground.

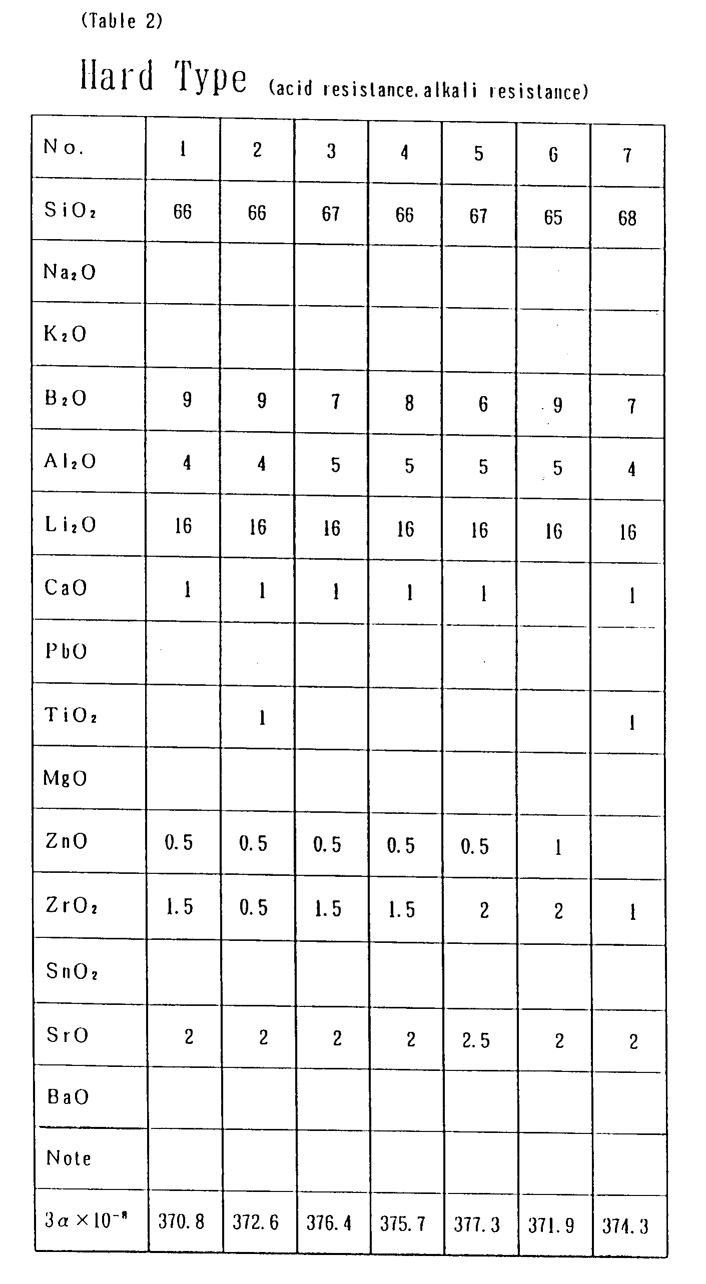

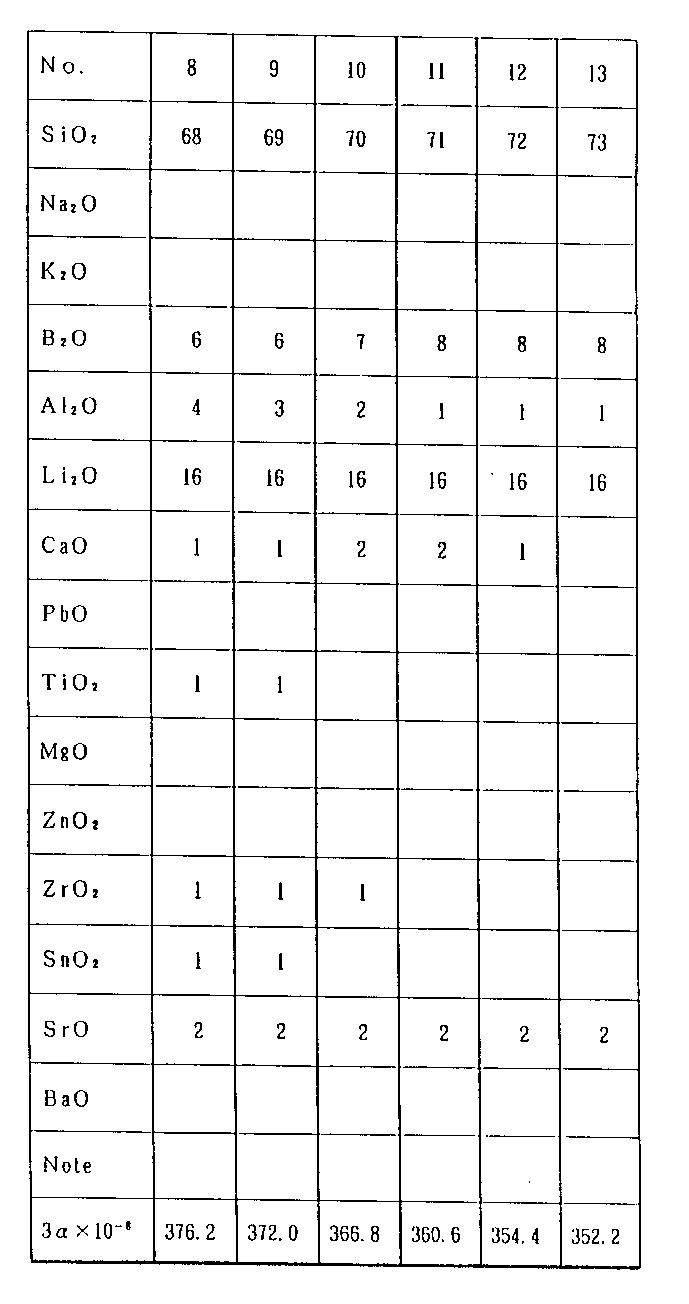

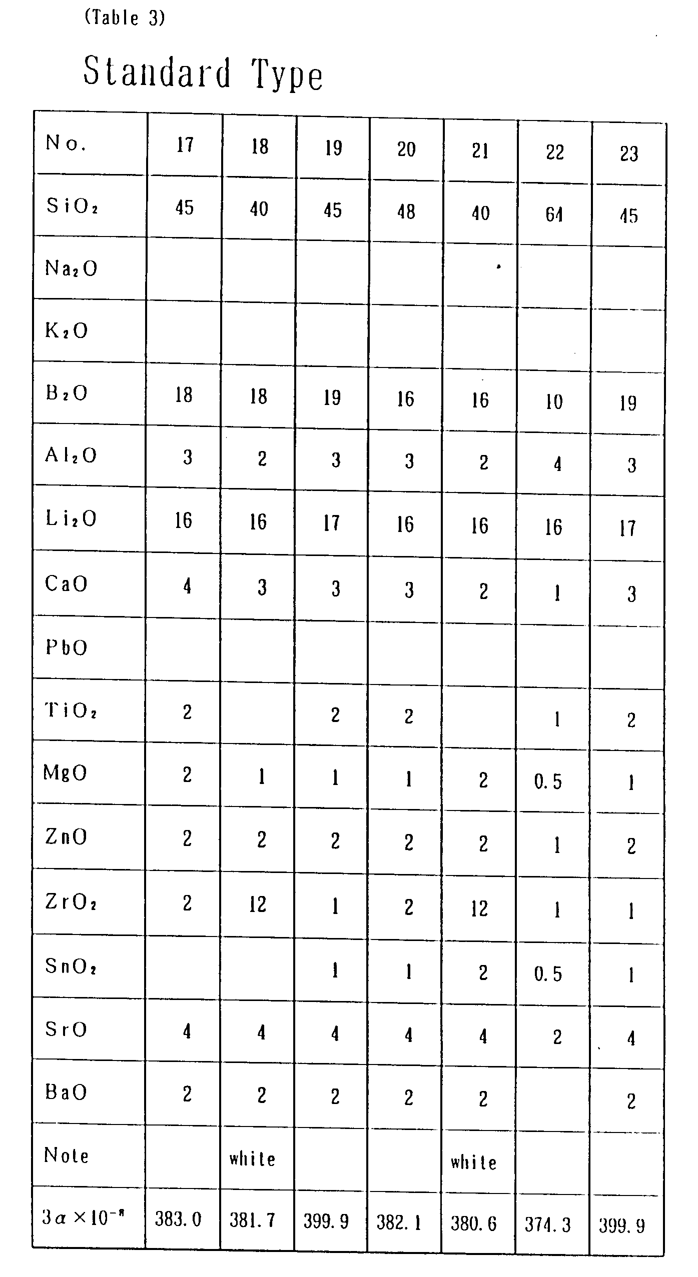

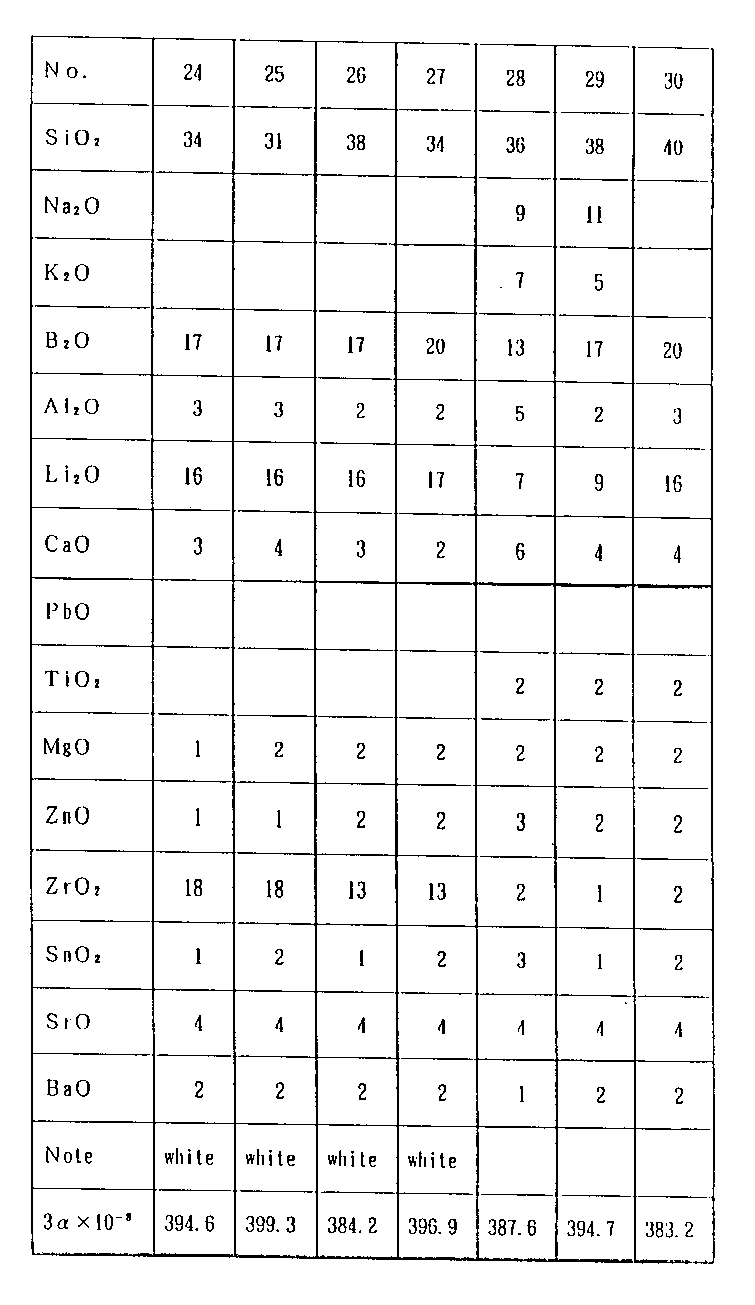

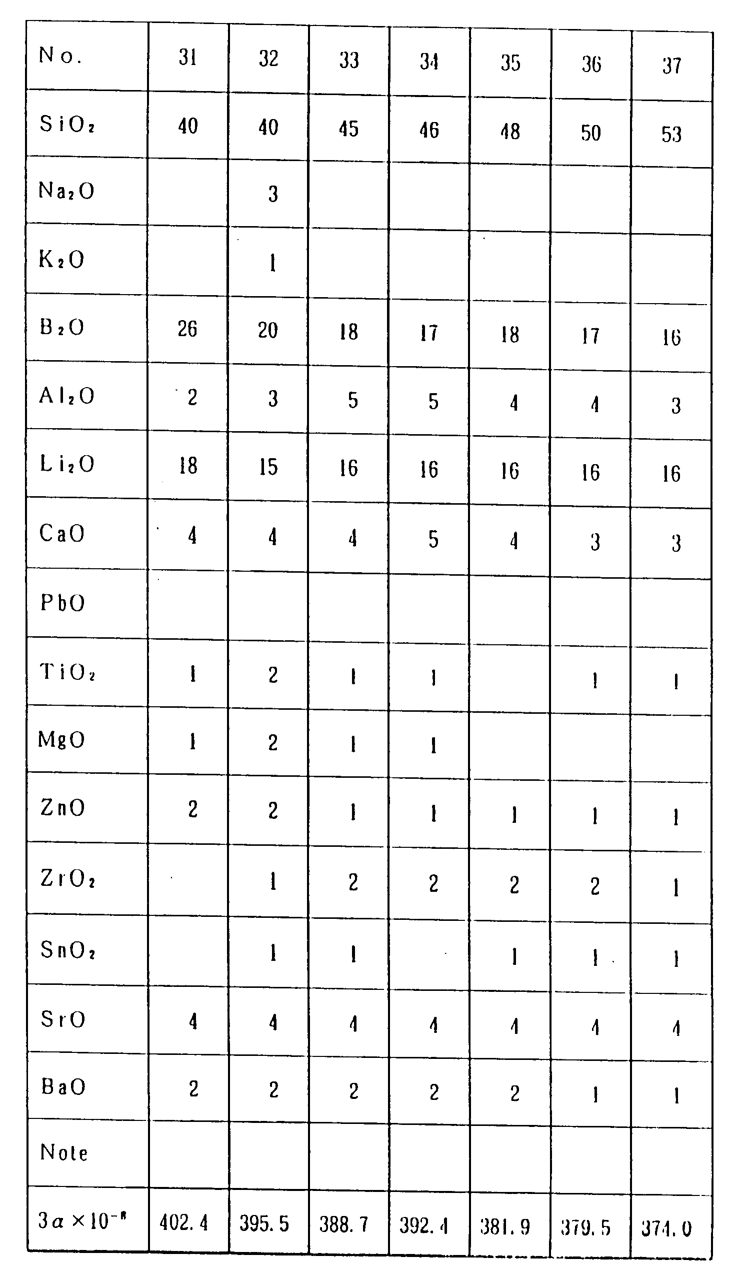

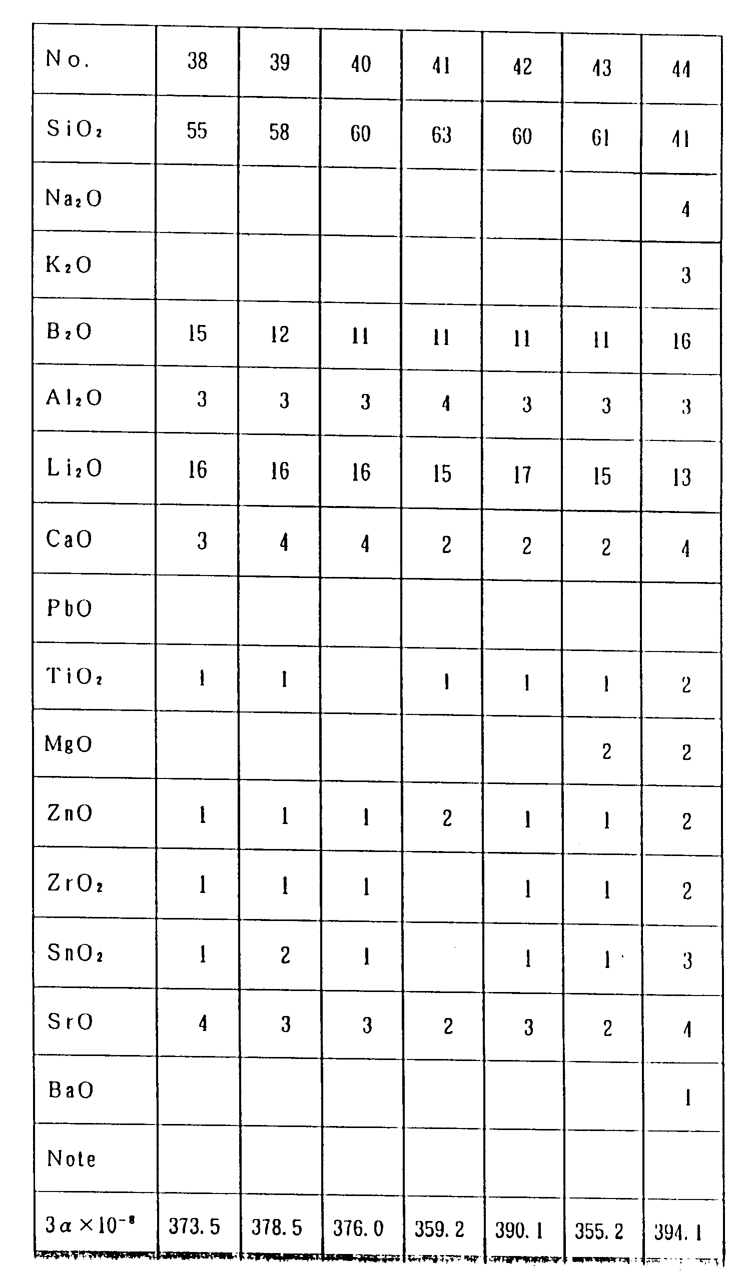

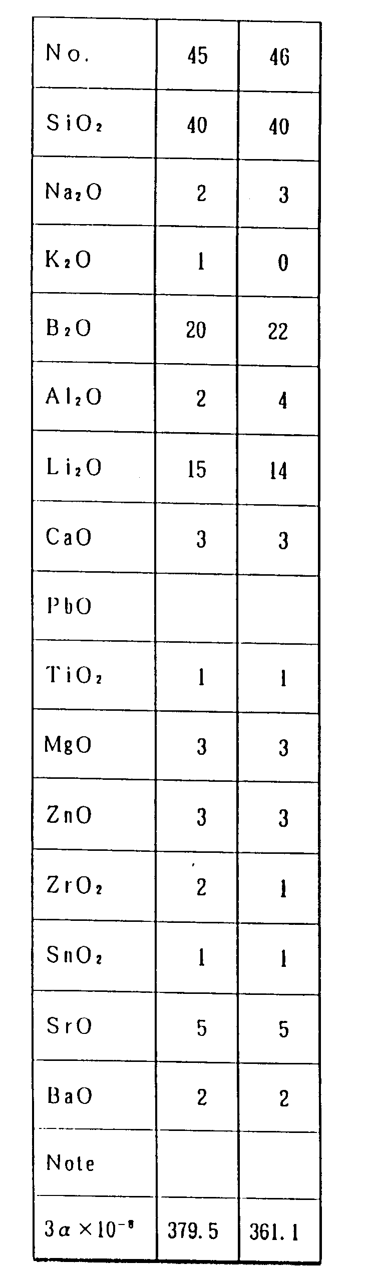

As can be understood from the above discussion, according to the present invention, since a glass material is sprayed on the metal surface of the roll, the roll has an improved durability and corrosion-resistance, being water-proof, weather-proof and light-proof, etc., and a high heat resistance and an increased electrical insulation. Furthermore, no foreign matter tends to stick to the outer surface of the roll. Even if foreign matter such as dust sticks to the roll surface, the foreign matter can be easily removed.

In addition to the foregoing, owing to the composition of the sprayed glass layer, the roll exhibits a high chemical durability, such as acid-resistance and alkali-resistance, etc., resulting in an increased service life thereof.

Furthermore, according to the manufacturing method of the present invention, since the glass material is directly sprayed on the metal surface of the roll by a sprayer, the spraying operation can be simply and easily carried out. Finally, upon repairing the roll, the glass material can be directly resprayed on the portion to be repaired.

## Claims

1. A method for providing a metal roll to be used as a printing or guide roll with a glass surface, wherein
- the surface of the roll is subjected to a blast treatment,
- the surface of the metal roll is preheated to 200 to 600°C,
- a glass material is coated by a plasma spraying method onto the surface of the metal roll, and
- after being cooled, the sprayed glass surface is ground to form a smooth outer surface .

2. A method according to claim 1, wherein a stainless undercoat layer is formed on the blast-treated surface.

3. A method according to claim 1 or 2, wherein the roll is preheated to 200 to 400°C and the glass material sprayed onto the surface of the roll contains 31 to 64% SiO₂.

4. A method according to claim 3, wherein the glass material contains 0 to 11% Na₂O, 0 to 7% K₂O, 10 to 26% B₂O, 2 to 5% Al₂O, 7 to 18 % Li₂O, 1 to 6% CaO, 0 to 2% TiO₂, 0 to 3% MgO, 1 to 3% ZnO, 0 to 18% ZrO₂, 0 to 3% SnO₂ and 0 to 2% BaO.

5. A method according to claim 1 or 2, wherein the roll is preheated to 400 to 600°C, the glass material sprayed onto the surface of the roll contains 66 to 73% SiO₂, and the cooling is performed at a rate of 50 to 200°C/h.

6. A method according to claim 5, wherein the glass material contains 6 to 9 % B₂O, 1 to 4% Al₂O, 16% Li₂O, 0 to 2% CaO, 0 to 1% TiO₂, 0 to 1% ZnO, 0 to 2% ZrO₂, 0 to 1% SnO₂ and 2 to 2.5 % SrO.

7. A method according to any one of claims 1 to 6, wherein the cooling is carried out at a rate of 50°C/h when the roll has a complex shape and differing thicknesses.

8. A method according to any one of claims 1 to 7, wherein a roll is used having end members located at opposite ends of the cylindrical roll body to close the same, said end members having shaft portions for rotation of said roll and being provided with holes through which high temperature gas produced within the roll during the spraying can be discharged.

## Patentansprüche

1. Verfahren zum Versehen einer Metallwalze, die als eine Druck- oder Führungswalze zu verwenden ist, mit einer Glasoberfläche, bei dem
- die Oberfläche der Walze einer Strahlbehandlung unterzogen wird,
- die Oberfläche der Metallwalze auf 200 bis 600°C vorerhitzt wird,
- ein Glasmaterial mit einem Plasmaspritzverfahren auf die Oberfläche der Metallwalze aufgetragen wird und
- die aufgespritzte Glasoberfläche nach dem Abkühlen zur Bildung einer glatten Außenoberfläche geschliffen wird.

2. Verfahren nach Anspruch 1, bei dem eine rostfreie Grundierschicht auf der strahlbehandelten Oberfläche gebildet wird.

3. Verfahren nach Anspruch 1 oder 2, bei dem die Walze auf 200 bis 400°C vorerhitzt wird und das auf die Oberfläche der Walze aufgespritzte Glasmaterial 31 bis 64 % SiO₂ enthält.

4. Verfahren nach Anspruch 3, bei dem das Glasmaterial 0 bis 11 % Na₂O, 0 bis 7 % K₂O, 10 bis 26 % B₂O, 2 bis 5 % Al₂O, 7 bis 18 % Li₂O, 1 bis 6 % CaO, 0 bis 2 % TiO₂, 0 bis 3 % MgO, 1 bis 3 % ZnO, 0 bis 18 % ZrO₂, 0 bis 3 % SnO₂ und 0 bis 2 % BaO enthält.

5. Verfahren nach Anspruch 1 oder 2, bei dem die Walze auf 400 bis 600°C vorerhitzt wird, das auf die Oberfläche der Walze aufgespritzte Glasmaterial 66 bis 73 % SiO₂ enthält und das Abkühlen mit einer Geschwindigkeit von 50 bis 200°C/h durchgeführt wird.

6. Verfahren nach Anspruch 5, bei dem das Glasmaterial 6 bis 9 % B₂O, 1 bis 4 % Al₂O, 16 % Li₂O, 0 bis 2 % CaO, 0 bis 1 % TiO₂, 0 bis 1 % ZnO, 0 bis 2 % ZrO₂, 0 bis 1 % SnO₂ und 2 bis 2,5 % SrO enthält.

7. Verfahren nach einem der Ansprüche 1 bis 6, bei dem das Abkühlen mit einer Geschwindigkeit von 50°C/h durchgeführt wird, wenn die Walze eine komplexe Form und verschiedene Dicken aufweist.

8. Verfahren nach einem der Ansprüche 1 bis 7, bei dem eine Walze verwendet wird, welche Endglieder aufweist, die an entgegengesetzten Enden des zylinderförmigen Walzenkörpers zum Schließen desselben befindlich sind, wobei die Endglieder Wellenteile zum Drehen der Walze aufweisen und mit Öffnungen versehen sind, durch welche Hochtemperaturgas austragbar ist, das während des Spritzens innerhalb der Walze erzeugt wird.

## Revendications

1. Procédé pour munir d'une surface de verre un rouleau métallique destiné à être utilisé comme rouleau d'impression ou rouleau guide, dans lequel la surface du rouleau est soumise à un traitement de décapage au jet, la surface du rouleau métallique est préchauffée à 200 à 600°C, une matière vitreuse est appliquée sur la surface du rouleau métallique par un procédé de pulvérisation au plasma, et, après refroidissement, la surface de verte appliquée par pulvérisation est polie pour former une surface externe tisse.

2. Procédé selon la revendication 1, dans lequel une sous-couche inoxydable est formée sur la surface traitée par décapage au jet.

3. Procédé selon la revendication 1 ou 2, dans lequel le rouleau est préchauffé à 200 à 400°C et la matière vitreuse pulvérisée sur la surface du rouleau contient 31 à 64% de SiO₂.

4. Procédé selon la revendication 3, dans lequel la matière vitreuse contient 0 à 11% de Na₂O, 0 à 7% de K₂O, 10 à 26% de B₂O, 2 à 5% de Al₂O, 7 à 18% de Li₂O, 1 à 6% de CaO, 0 à 2% de TiO₂, 0 à 3% de MgO, 1 à 3% de ZnO, 0 à 18% de ZrO₂, 0 à 3% de SnO₂ et 0 à 2% de BaO.

5. Procédé selon la revendication 1 ou 2, dans lequel le rouleau est préchauffé à 400 à 600°C, la matière vitreuse pulvérisée sur la surface du rouleau contient 66 à 73% de SiO₂, et le refroidissement est réalisé à une vitesse de 50 à 200°C/h.

6. Procédé selon la revendication 5, dans lequel la matière vitreuse contient 6 à 9% de B₂O, 1 à 4% de Al₂O, 16% de Li₂O, 0 à 2% de CaO, 0 à 1% de TiO₂, 0 à 1% de ZnO, 0 à 2% de ZrO₂, 0 à 1% de SnO₂ et 2 à 2,5% de SrO.

7. Procédé selon l'une quelconque des revendications 1 à 6, dans lequel le refroidissement est réalisé à une vitesse de 50°C par heure, lorsque le rouleau présente une forme complexe et différentes épaisseurs.

8. Procédé selon l'une quelconque des revendications 1 à 7, dans lequel on utilise un rouleau présentant des éléments terminaux situés aux extrémités opposées du corps cylindrique du rouleau et fermant ledit corps, lesdits éléments terminaux présentant des parties jouant le rôle d'arbre pour la rotation dudit rouleau et étant munis de trous par lesquels les gaz à haute température produits à l'intérieur du rouleau pendant la pulvérisation, peuvent s'échapper.
